# EUROPÄISCHE PATENTSCHRIFT

(11) **EP 0 829 325 B1**
(45) Veröffentlichungstag und Bekanntmachung des Hinweises auf die Patenterteilung: **06.02.2002**
(21) Anmeldenummer: 97115884.5
(22) Anmeldetag: 12.09.1997
(51) Int. Cl.: B23K 26/12

(54) **Vorrichtung zum Lasergaslegieren von Titan und seiner Legierungen**
Device for laser gas alloying of titanium and its alloys
Dispositif d'alliation du titane et de ses alliages

(30) Priorität: 13.09.1996 DE 19637449; 16.09.1996 DE 19637738
(43) Veröffentlichungstag der Anmeldung: 18.03.1998
(73) Patentinhaber: FRAUNHOFER-GESELLSCHAFT ZUR FÖRDERUNG DER ANGEWANDTEN FORSCHUNG E.V., 80636 München (DE); KARL H. ARNOLD MASCHINENFABRIK GMBH & CO. KG, 88214 Ravensburg (DE)
(72) Erfinder: Brenner, Berndt, Prof. Dr., 01474 Pappritz (DE); Gnann, Rüdiger Arnold, 88214 Ravensburg (DE); Bonss, Steffen, 98544 Zella-Mehlis (DE)

(56) Entgegenhaltungen:
- EP-A- 0 411 362
- WO-A-90/14447
- US-A- 4 031 351
- US-A- 4 434 189
- US-A- 5 413 641
- PATENT ABSTRACTS OF JAPAN vol. 006, no. 263 (M-181), 22.Dezember 1982 & JP 57 156888 A (TOKYO SHIBAURA DENKI KK), 28.September 1982,
- H.W. BERGMANN: "Thermochemische Behandlung von Titan und Titanlegierung durch Laserumschmelyen und Gaslegieren" ZEITSCHRIFT FÜR WERKSTOFFTECHNIK, Nr. 16, 1985, DARMSTADT (DE), Seiten 392-405, XP002049216

## Beschreibung

Die Erfindung bezieht sich auf die Randschichtveredlung. Objekte, bei denen ihre Anwendung möglich und zweckmäßig ist, sind alle Bauteile, die unter Zusatz reaktiver Gase durch ein Aufschmelzen der Randschicht verschleißbeständiger gemacht werden sollen sowie insbesondere verschleißbeanspruchte Bauteile aus Titan und seinen Legierungen. Besonders vorteilhaft ist die Erfindung zum Lasergaslegieren von kompliziert geformten Teilen wie z. B. Humanimplantaten, Turbinen- und Motorbauteilen sowie Bauteilen aus der Luft- und Raumfahrt einsetzbar.

Es ist bekannt, durch Lasergaslegieren von Titanlegierungen sehr verschleißbeständige Randschichten zu erzeugen. Dazu wird in einer Stickstoffatmosphäre ein gering defokussierter Laserstrahl mit einer geeigneten Geschwindigkeit über die zu schützende Bauteilpartie bewegt. Laserleistung, Leistungsdichte und Vorschubgeschwindigkeit werden dabei so abgestimmt, daß eine 0,2 mm bis 2,0 mm tiefe und 0,5 mm bis etwa 6 mm breite Schmelzpfütze entsteht, in der ausreichend Stickstoff gelöst wird. Während der Erstarrung wird Titannitrid als harte Phase ausgeschieden. Bei ausreichender Konzentration von Titannitrid lassen sich Härten größer als 1000 HV erzielen.

Zur Erzeugung der Stickstoffatmosphäre sind verschiedene Vorrichtungen bekannt geworden. Im einfachsten Fall (z. B. H. W. Bergmann: »Thermochemische Behandlung von Titan und Titanlegierungen durch Laserumschmelzen und Gaslegieren« Z. Werkstofftech. 16 (1985) 392 - 405, U. Fink WO-A-90/14447) wird der Stickstoff zusammen mit einem Edelgas durch senkrecht zur Vorschubnchtung angebrachte Düsen möglichst nahe an den Schmelzpunkt herangebracht, wobei Durchflußmenge, Abstand, Einfallswinkel und Stickstoffanteil im Fördergas auf die Laserparameter Laserieistung, Laserstrahldurchmesser und Laserstrahlvorschubgeschwindigkeit angepaßt werden. Wegen der versprödenden Wirkung schon geringer Sauerstoffgehalte in der umgeschmolzenen Zone, muß dabei ein möglichst guter Sauerstoffausschluß gewährleistet werden. Der Stickstoffpartialdruck kann dabei durch eine Gasmischstation vorgewählt werden.

Der Mangel dieser Vorrichtung besteht darin, daß die Reproduzierbarkeit der Härte der Schichten insbesondere in der Nähe von Kanten zu gering ist, die Schichten schon bei relativ niedrigen Schichthärten unverhältnismäßig spröde sind und eine Rißbildung schon bei geringen Härten einsetzt. Darüberhinaus ist es schwierig, auch an Kanten, Bohrungen oder an Bauteilradien konstante Schichteigenschaften zu garantieren.

Die Ursache dieser Mängel liegt darin, daß es nicht gelingt, den Sauerstoffzutritt zur Schmelze völlig auszuschließen und konstante Stickstoffpartialdrücke zu gewährleisten. Beide Ursachen treten verstärkt in der Nähe von Kanten, Poren und Radien auf, so daß es kaum möglich ist, hochbelastbare kompliziert geformte Bauteile zu behandeln.

Zur Gewährleistung des Sauerstoffausschlusses an der Schmelzbadoberfläche ist eine spezielle Gasführungsdüse bekanntgeworden (A. Coulon: F 9212929; US-A-5.413.641), indem ein mit einem hohen Druck (4 bis 12 bar) austretender Stickstoffstrahl konzentrisch von einem Mantel aus Edelgas geringeren Druckes (1 bis 2 bar) umhüllt wird.

Als mangelhaft erweist sich bei dieser Vorrichtung jedoch, daß die Oberflächenrauhigkeit und die Rißanfälligkeit der so hergestellten TiN-haltigen Schichten zu groß sind. Weiterhin ist es schwierig Kanten, Bohrungen und Radien mit gleichmäßig harten Schichten zu versehen ohne deren Geometrie zu zerstören.

Die Ursache für diese Mängel besteht in dem mit hohem Druck in die Schmelze blasenden kalten Stickstoffstrahl. Dieser erzeugt Diskontinuitäten in der Schmelzbaderstarrung, die zu einer Riffelung führen, und die Geometrie von Kanten, Bohrungen und Radien zerstören, sowie unerwünscht hohe Abkühlgeschwindigkeiten.

Ein intensiver Kontakt zwischen Stickstoff und Schmelzbad ohne das direkte Auftreffen eines Stickstoffstrahles auf die Schmelze wird nach I. Zaplatynsky Siehe die US-A-4 434 189, die als nächsliegender Stand der Technik angeschen wird durch die Verwendung einer Stickstoff-gefluteten Vakuumkammer erzielt. Der Laser befindet sich dabei außerhalb der Kammer und strahlt durch ein NaCI-Fenster auf das in der Kammer befindliche , beweglich angeordnete Bauteil. Da kein Gasstrahl auf die Schmelze trifft, können auch Bauteilpartien in der Nähe von Kanten, Bohrungen und Radien ohne zusätzliche Beeinflussung der Formgenauigkeit durch den Gasstrahl behandelt werden.

Nachteilig wirkt sich bei dieser Anordnung aus, daß sie zur Behandlung von kompliziert geformten Bauteilen zu aufwendig ist und zu lange Abpumpzeiten benötigt.

Die Ursache dieser Mängel besteht darin, daß eine statisch gasdichte Anordnung realisiert wird. Dadurch muß ein relativ großes Volumen abgepumpt werden und die bei der Behandlung komplizert geformter Bauteile notwendigen mehreren CNC-Achsen in die Kammer hineingeführt oder vakuumfest ausgeführt werden. Ein weiterer Mangel besteht in der größeren Störanfälligkeit der Anordnung im Falle des Umschmelzens. Die Ursache dafür liegt in der Notwendigkeit der Verwendung von transmissiven Optiken, um den Laserstrahl in die Reaktionskammer zu bringen. Beim Lasergaslegieren entstehen jedoch durch die Reaktion des Stickstoffes mit leichten flüchtigen Legierungselementen wie z. B. Aluminium-Stäube, die sich an der gesamten Innenseite der Reaktionskammer und auch den transmissiven Optiken niederschlagen. Eine Beaufschlagung solcherart verschmutzter Optiken mit intensiver Laserstrahlung führt zu ihrer frühzeitigen Zerstörung.

Das Ziel der Erfindung ist es, eine relativ einfache, standfeste Vorrichtung anzugeben, mit der sich reproduzierbar sehr verschleißbeständige, rißfreie und zähere Randschichten auf kompliziert geformten Bauteilen aus Titan und seinen Legierungen mit Hilfe des Lasergaslegierens herstellen lassen. Der Erfindung liegt die Aufgabe zu Grunde, eine Anordnung anzugeben, die einen wirksamen Sauerstoffausschluß und einen konstanten Stickstoffpartialdruck auch bei komplizierten Bauteilgeometrien garantiert und dazu ohne einen direkt auf das Schmelzbad auftreffenden Gasstrahl sowie ohne mechanisch-statisch dichtende Kammern und transmissive optische Elemente auskommt. Erfindungsgemäß wird diese Aufgabe mit einer Vorrichtung zum Lasergaslegieren von Titan und seinen Legierungen bestehend aus einer gasdichten Reaktionskammer, einem Element für den Laserstrahldurchtritt, einer Öffnung für den Reaktionsgaseintritt und einer Gasmischstation wie in den Ansprüchen 1 bis 14 dargestellt, gelöst.

Eine vorteilhafte Ausgestaltung der Erfindung sieht vor, die gesamte Baugruppe 2 in das Dreibackenfutter einer CNC-Maschine aufzunehmen, um so sehr einfach rotationssymmetrische oder bogenförmige Relativbewegungen zwischen Laserstrahl und Bauteil zu realisieren.

Für kompliziertere Bauteilgeometrien sieht Anspruch 3 vor in die Reaktionskammer zusätzliche CNC-gesteuerte Dreh- und Kippbewegungen einzuführen. Bei der Erfindungsgestaltung gemäß Anspruch 7 wird vorteilhafterweise die Erkenntnis berücksichtigt, daß sich handelsübliche, sehr preiswerte λ-Sonden zur Überwachung des Sauerstoffpartialdruckes hervorragend eignen. Vorteilhaft bei der Ausgestaltung der Vorrichtung nach Anspruch 9 ist, daß damit eine Störung oder Beeinflussung der Schmelzbadkonvektion durch den Reaktionsgasstrahl völlig ausgeschlossen ist. Eine weitere vorteilhafte Ausgestaltung sieht vor, die Baugruppe 1 mit halbkugelförmig ausgebildeter Innenfläche auszuführen, in deren Mittelpunkt sich etwa der Laserstrahlauftreffpunkt befindet. Die Innenfläche ist dabei aus Kupfer ausgeführt. Die dadurch in der Nähe des Bearbeitungsortes rückreflektierte Strahlung erhöht die Bauteiltemperatur und vermindert rißbegünstigende hohe Abschreckgeschwindigkeiten.

### Ausführungsbeispiele

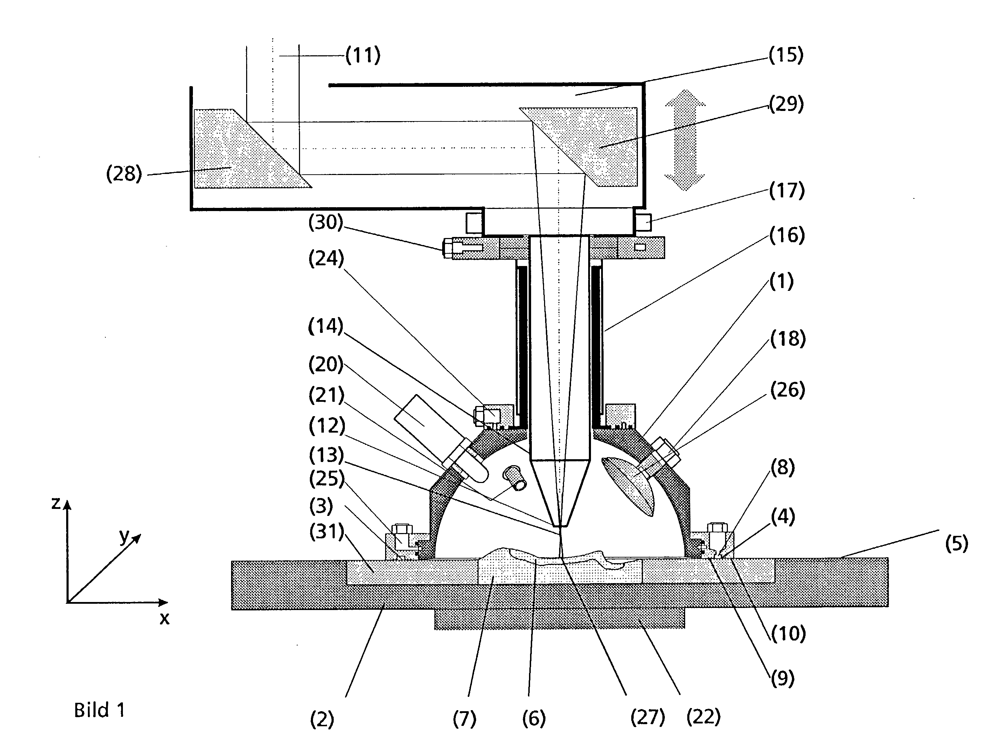

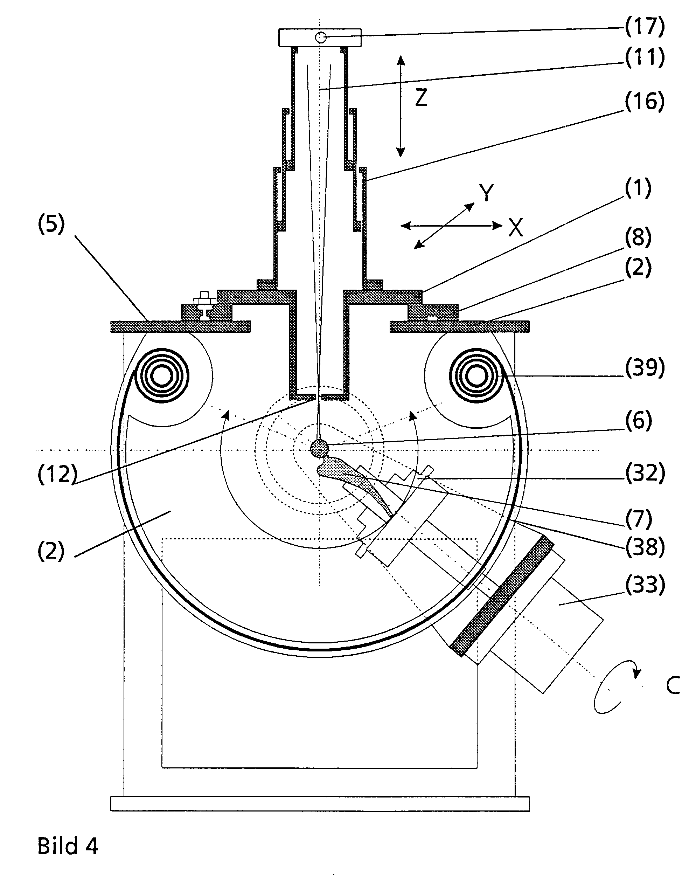

Die Erfindung wird in nachstehenden Ausführungsbeispielen näher erläutert. Bild 1 zeigt eine Variante wie sie vorteilhaft für vorwiegend ebene oder rotationssymmetrische Bauteile, deren Stirnfläche behandelt werden soll, verwendet wird. Im Bild 2 wird eine Variante 2 gezeigt, die sich günstig für die Randschichtveredlung von Hüftgelenkimplantaten verwenden läßt. Eine alternative Ausführung zur Randschichtveredlung von Hüftgelenkimplantaten zeigen Bild 3 und 4.

### Beispiel 1

Die Reaktionskammer besteht aus den beiden Baugruppen 1 und 2. Baugruppe 1 ist über ein Teleskoprohr 16 an der Unterkante einer geeigneten Laserstrahlformungseinheit 15 angeflanscht, das im einfachsten Fall aus einem Planspiegel 28 und einem off-axis-Parabolspiegel 29 besteht. Die Laserstrahlformungeinheit ist mit der z-Achse der CNC-Bewegungsmaschine verbunden. Beim Hochfahren der z-Achse zieht sich das Teleskoprohr 16 aus. Gleichartig bewegt sich das an der Laserstrahlformungseinheit 15 befestigte Blendenrohr 14 sowie der sich in der Ebene der Blende 12 befindliche Laserfokus 13 nach oben. Dadurch läßt sich der am Laserauftreffpunkt 27 nötige Strahldurchmesser einstellen.

Baugruppe 2 ist dagegen mit dem Drehflansch 22 in ein senkrecht stehendes Dreibackenfutter einer c-Achse einer CNC-gesteuerten Bewegungsmaschine eingespannt. Das Dreibackenfutter ist auf dem x-y-Tisch der CNC-Maschine aufgesattelt. Das Bauteil 7 ist in eine geeignet gestaltete Formplatte 31 eingelegt.

Baugruppe 1 und Baugruppe 2 sind durch das Traggaspolster 3 reibungsfrei entlang der Gleitflächen 4 und 5 in der x-y-Ebene verschiebbar. Die Form und Abmaße des inneren Tragflächenanteiles 9 und des äußeren Tragflächenanteiles 10 werden so gestaltet, daß der Traggasverbrauch minimal ist und der größte Teil des Traggases nach außen entweicht. Diese Anordnung von Baugruppe 1und Baugruppe 2 gestattet es in einfacher Weise, den Laserstrahlauftreffpunkt 27 in einem 3D-Bearbeitungsraum über das Bauteil 7 zu führen. Weiterhin kann die gesamte Vorrichung sehr schnell und ohne Zusatzeinrichtungen an jede geeignete CNC-Laserbearbeitungsanlage angebaut werden.

Die Innenfläche der Baugruppe 1 ist kugelförmig ausgedreht und besteht aus Kupfer. In der Innenfläche befinden sich Öffnungen für eine Vorrichtung zur Messung und Überwachung des Sauerstoffpartialdruckes 20, zur visuellen oder mikroskopischen Beobachtung 21, zum Reaktionsgaseinlaß 18, das Blendenrohr 14 sowie Temperaturmessung. Die Vorrichtung zur Messung und Überwachung des Sauerstoffpartialdruckes 20 besteht im Fall des Ausführungsbeispieles 1 aus einer handelsüblichen λ-Sonde, wie sie als Sensor für einen geregelten Pkw-Katalysator verwendet wird. In die Öffnung zur visuellen oder optischen Beobachtung 21 ist ein geradsichtiges Endoskoprohr eingebracht, das über ein Kugelgelenk verschiebbar, drehbar und kippbar ist. Der Einlaßstutzen für das Reaktionsgas 18 ist mit einem Schnellverschluß versehen. Konzentrisch zum Einlaßstutzen 18 befindet ich eine konvex gewölbte Gasprallfläche 26. Das Blendenrohr 14 trägt am unteren Ende eine einschraubbare Blende 12 aus Molybdän. Der Blendendurchmesser beträgt 2,0 mm.

Zum Abführen der Strahlungs- und Reaktionswärme befinden sich an drei Positionen der Baugruppe 1 Kühleinrichtungen. Die Wasserkühlung 25 besteht aus einem Kühlring aus Kupfer mit einem Kühlkanal, der sich umlaufend um den gesamten Umfang der unteren Berandung der Baugruppe 1 erstreckt und gegenüber dieser mit 0-Ringen abgedichtet ist. Der Kühlring 24 aus Kupfer kühlt des Teleskoprohr 16. Das Blendenrohr 14 wird durch ein an seinem oberen Ende angeflanschten Kühlring 30 gekühlt.

In das Strahlformungssystem 15 ist ein cross-jet-Saugsystem 17 integriert. Dieses cross-jet-Saugsystem garantiert die Trennung des mit dem Reaktionsgas gefüllten Raumes von dem Raum des Strahlformungssystems, der mit getrockneter Luft gespült wird.

Das Teleskoprohr 16 ist dreistufig ausgeführt und weist einen Hub von 65 mm auf. Der Innendurchmesser der Baugruppe 1 beträgt 152 mm.

Zum Einlegen eines Bauteiles 7 in die Formplatte 31 wird das an der z-Achse angeflanschte Laserstrahlformungssystem 15 um ein Maß,das größer ist als die Summe aus Hub des Teleskoprohres 16 und der Höhe des Bauteiles 7 hochgefahren. Die Baugruppe 1 hängt jetzt frei am ausgezogenen Teleskoprohr 16. Nach dem Einlegen des Bauteiles wird CNC-gesteuert die z-Achse auf Programmstart-Position gefahren. Zur Vorbereitung der Bearbeitungsaufgabe wird an der Gasmischstation ein Gemisch von Ar zu N₂ von z. B. 6 : 4 eingestellt. Das Gemisch wird nach einer Verzweigung über zwei getrennt einstellbare Durchflußregler zum Einlaßstutzen 18 und dem Einlaß des Traggaskanals 8 zugeführt. Die Durchflußmenge wird solange erhöht, bis die Baugruppe 1 auf einem Gastkissen schwebt. Die relativen Durchflußmengen zwischen Einlaßstutzen 18 und Traggaskanal 8 werden so gewählt, daß der Traggasanteil minimal wird. Die minimale Durchflußmenge pro Zeiteinheit durch den Einlaßstutzen 18 muß dabei größer sein als das bei einer z-Bewegung in der Teleskopröhre zunehmende Volumen.

Durch den Aufprall des Reaktionsgases auf die Gasprallfläche 26 wird der Gasstrahl soweit abgelenkt und verteilt, daß er nicht direkt auf die Funktionsfläche 6 des Bauteiles 7 trifft. Der Überdruck innerhalb des Reaktionsraumes ist sehr gering (< 100 mbar), so daß die Gasverluste durch die als Druckstufe wirkende Blende 12 sehr gering ist.

Mit der λ-Sonde wird der durch das Spülen mit Reaktionsgas abnehmende Sauerstoff-Partialdruck überwacht. Als max. zulässige Konzentration wurden 5·10 ⁻⁴ Volumen% festgelegt. Diese sind nach 90 s erreicht. Durch Start des CNC-Programmes wird das Lasergaslegieren begonnen. Charakteristische Behandlungsparameter für das Lasergaslegieren von Ti6Al4V sind z. B. Laserleistung 5 kW, Laservorschubgeschwindigkeit 480 mm/min, Spurabstand 0,75 mm, Verhältnis Ar : N₂ = 40 : 60. Damit werden folgende Ergebnisse erreicht: Härte in der Umschmelzzone 700 HV, Sauerstoffgehalt in der Umschmelzzone 0,13 %, Sauerstoffgehalt im Grundgefüge 0,18 %, Tiefe der Umschmelzzone 1,2 mm.

Verglichen mit dem Stand der Technik weist diese Vorrichtung folgende Vorteile auf:
- garantierter Sauerstoffausschluß mit einfachen technischen Mitteln
- sehr gute Konstanz der Bearbeitungsparameter
- gute und reproduzierbare Behandelbarkeit von kompliziert geformten Bauteilen mit Kanten, Bohrungen oder Radien
- gute Energieausnutzung durch Verwendung der reflektierten Strahlung zum Vorwärmen
- Verbesserung von Standzeit und Reproduzierbarkeit durch Vermeidung der Verwendung transmissiver Optiken sowie effektiven Verschmutzungsschutz der optischen Bauelemente
- geringe Anfälligkeit zur Rißbildung durch
   - Sauerstoffausschluß
   - Vermeidung der Vergrößerung der Abschreckraten durch Vermeidung des Auftreffens des kalten Stickstoffstrahles auf die Schmelze
   - sehr reproduzierbaren Stickstoffeintrag
   - Vorwärmen durch reflektierte Strahlung

Im Vergleich zur statisch gasdichten Vakuumkammer (siehe Zaplatynski US-A-4.434.189) hat die erfindungsgemäße dynamisch gasdichte Reaktionskammer darüberhinaus wesentliche Vorteile bei der Behandlung relativ großer Bauteile mit vergleichsweise kleinen Funktionsflächen. In diesen Fällen ist es ohne Verletzung des Erfindungsgedankens und bei Beibehaltung der erfindungsgemäßen Merkmale der Baugruppe 1 möglich,
- entweder als Baugruppe 2 direkt das zu behandelnde Bauteil 7 zu verwenden. Als Gleitfläche 5 dient in diesem Fall direkt die Oberfläche des Bauteiles 7.
- oder bei komplizierter geformten Oberflächen des Bauteiles 7 die Baugruppe 2 dergestalt auszuführen, daß die Wandungen der Baugruppe 2 auf ihrer Oberseite der Gleitfläche 5 tragen und auf der Unterseite dem Negativ des Bauteiles 7 entsprechen, die Abdichtung zwischen Bauteil 2 und Bauteil 7 mit einem umlaufenden Ring elastischen Materials z. B. Gummi gewährleistet wird und die gesamte Baugruppe 2 mittels mechanischer Mittel (z. B. Feder, Gewicht, Hydraulik- oder Pneumatikelemente o. ä.) auf das Bauteil 7 gepreßt wird.

### Beispiel 2

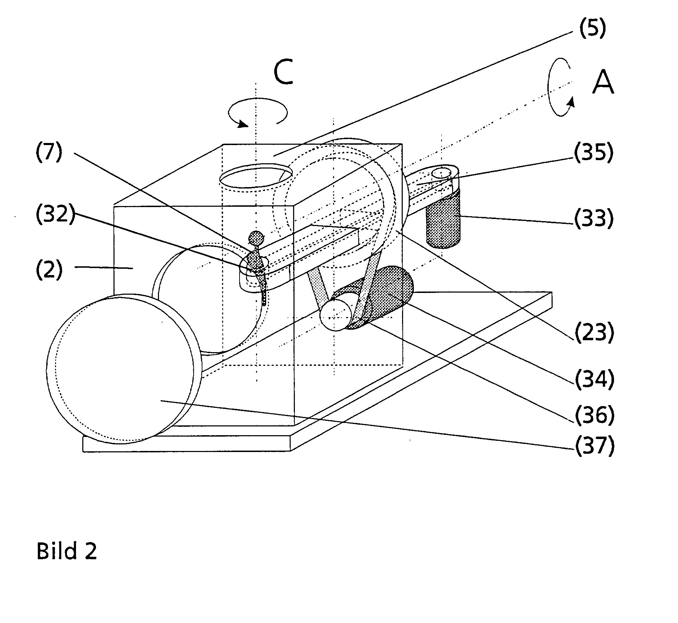

Bei relativ kleinen, kompliziert geformten Teilen, z. B. Hüftgelenken ist es dagegen günstiger das gesamte Bauteil 7 innerhalb der Reaktionskammer zu bewegen (siehe Bild 2) . Die Baugruppe 1 bleibt unverändert und Baugruppe 2 nimmt die Mittel der Bauteilbewegung auf. Dazu werden sowohl die Bewegung des CNC-Antriebes Drehachse 33 als auch die des CNC-Antriebes Kippachse 34 durch eine gemeinsame Drehdurchführung 23 in die Reaktionskammer eingeführt. Die Bewegungen der CNC-Antriebe 33 und 34 werden über die Zahnriemen Drehachse 35 und den Zahnriemen Kippachse 36 zum Bauteil 7 übertragen. Die gesamte Oberseite der Baugruppe 2 ist als Gleitfläche 5 ausgebildet. Zur Bauteileinrichtung und Teileentnahme dient der Deckel 37. Zusätzlich kann die Kammer oder der Deckel mit Öffnungen 21 zur visuellen oder mikroskopischen Beobachtung (nicht gezeichnet) versehen werden.

### Beispiel 3

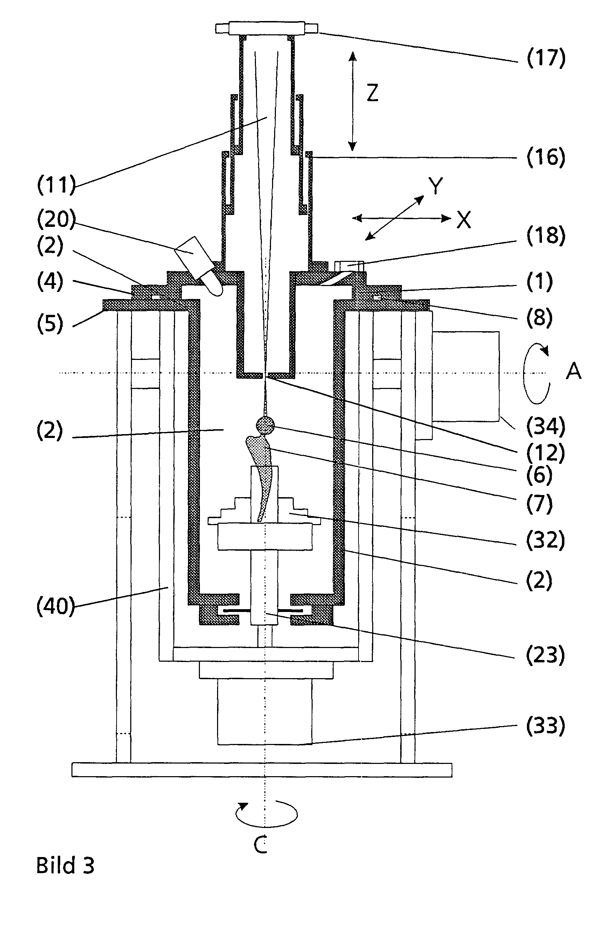

Eine andere technische Realisierung der Baugruppe 2 zum Lasergaslegieren von Hüftgelenken zeigen die Bilder 3 (Vorderansicht) und 4 (Seitenansicht). Die Baugruppe 1 kann unter Umständen unverändert bleiben. Die Baugruppe 2 bildet wieder die Reaktionskammer und ist als flacher stehender Zylinder ausgebildet. Die Drehbewegung erfolgt über einen direkten Antrieb der Probenhalterung 32 durch die Drehachse 33. Die Abdichtung der Drehbewegung erfolgt wiederum durch die Drehdurchführung 23. Die CNC-Drehachse 33 ist mit einem Kipparm 40 mit dem CNC-Antrieb Kippachse 34 verbunden und schwenkt entlang des Zylinderumfanges der Baugruppe 2. Die Abdichtung der Kippbewegung erfolgt durch ein Abdichtband 38 aus Stahl, das fest mit der Baugruppe CNC-Antrieb Drehachse 33 verbunden ist, durch die unter Federspannung stehende Bandaufwicklung 39 auf- und abgewickelt wird und gegen eine elastische Abdichtung nach innen dichtet.

### Bezugszeichenliste

- 1 -: Baugruppe 1
- 2 -: Baugruppe 2
- 3 -: Traggaspolster
- 4 -: Gleitfläche der Baugruppe 1
- 5 -: Gleitfläche der Baugruppe 2
- 6 -: zu schützende Funktionsfläche
- 7 -: Bauteil
- 8 -: Traggaskanal
- 9 -: innerer Tragflächenanteil
- 10 -: äußerer Tragflächenanteil
- 11 -: Laserstrahl
- 12 -: Blende
- 13 -: Fokuspunkt
- 14 -: Blendenrohr
- 15 -: Strahlformungseinheit
- 16 -: Teleskoprohr
- 17 -: cross-jet-Absaugsystem
- 18 -: Einlaßstutzen
- 20 -: Vorrichtung zur Messung und Überwachung des Sauerstoff-Partialdruckes
- 21 -: Öffnung zur visuellen oder mikroskopischen Beobachtung
- 22 -: Drehantriebsflansch
- 23 -: Drehdurchführung
- 24 -: Wasserkühlung Teleskoprohr
- 25 -: umlaufende Wasserkühlung Gleitfläche
- 26 -: Gasprallfläche
- 27 -: Laserstrahlauftreffpunkt
- 28 -: Planspiegel
- 29 -: Parabolspiegel
- 30 -: Kühlring
- 31 -: Formplatte
- 32 -: Bauteilhalterung
- 33 -: CNC-Antrieb Drehachse
- 34 -: CNC-Antrieb Kippachse
- 35 -: Zahnriemen Drehachse
- 36 -: Zahnriemen Kippachse
- 37 -: Deckel zur Teileentahme
- 38 -: Abdichtband
- 39 -: Bandaufwicklung
- 40 -: Kipparm

## Patentansprüche

1. Vorrichtung zum Lasergaslegieren von Titan und seinen Legierungen, bestehend aus einer gasdichten Reaktionskammer, einem Element für den Laserstrahldurchtritt, einer. Öffung für den Reaktionsgaseintritt und einer Gasmischstation, wobei die Reaktionskammer einen Einlaßstutzen 18 für das Reaktionsgas enthält, **dadurch gekennzeichnet, daß**
A. die gasdichte Reaktionskammer aus zwei Baugruppen 1 und 2 besteht und diese zwei Baugruppen nahezu reibungsfrei und vor Lufteintritt geschützt in einer waagerechten x-y-Ebene relativ zueinander beweglich sind,
B. die nahezu reibungsfreie Beweglichkeit durch ein Traggaspolster (3) realisiert wird,
C. zur Realisierung des durch das Traggaspolster (3) entstehenden Gaskisseneffektes die sich gegenüberstehenden Seiten (4 und 5) der Baugruppen 1 und 2 als plane Gleitflächen ausgebildet sind,
D. die Abmessungen der planen Gleitflächen (5) so bemessen sind, daß die Relativbeweglichkeit gegenüber der Baugruppe 1 größer ist als die zu schützende Funktionsfläche (6) des zu behandelnden Bauteiles (7),
E. die plane Gleitfläche (4) der Baugruppe 1 einen umlaufenden Traggaskanal (8) enthält,
F. der innere Tragflächenanteil (9) relativ zu dem äußeren Tragflächenanteil (10) so ausgebildet ist, daß der größte Anteil des Traggases nach außen entweicht,
G. der Durchtritt des Laserstrahles (11) in die Reaktionskammer durch eine Blende (12) gewährleistet wird, die sich im Fokuspunkt (13) des Laserstrahles (11) befindet,
H. die Blende (12) an einem Blendenrohr (14) befestigt ist, das direkt und starr mit der Laserstrahlformungseinheit (15) verbunden ist,
I. die Lage des Fokuspunktes (13) relativ zur Oberfläche der Funktionsfläche (6) durch ein Teleskoprohr (16) gewährleistet ist, das an seiner Oberseite mit der Laserstrahlformungseinheit (15) und an seiner Unterseite mit der Baugruppe 1 verbunden ist,
J. zur Absaugung der Reaktionsprodukte und zum Schutz des Strahlformungseinheit (15) ein cross-jet-Absaugsystem (17) zwischen Strahlformungseinheit (15) und Baugruppe 1 angeordnet ist,
K. sich außerhalb der Reaktionskammer eine Gasmischstation zur Einstellung des Stickstoffanteils im Reaktionsgas befindet,
L. in die Reaktionskammer eine Vorrichtung (20) zur Messung und Überwachung des Sauerstoff-Partialdruckes hineinreicht,
M. die Wandung der Reaktionskammer Öffnungen (21) zur visuellen und mikroskopischen Beobachtung des Umschmelzvorganges enthält.

2. Vorrichtung zum Lasergaslegieren von Titan und seinen Legierungen nach Anspruch 1, **dadurch gekennzeichnet, daß** zur Realisierung einfacher Drehbewegungen um die z-Achse die plane Gleitfläche (5) der Baugruppe 2 direkt mit einem Drehantriebsflansch (22) verbunden ist und der Drehantriebsflansch (22) so ausgebildet ist, daß er mit der gesamten Baugruppe 2 in ein Dreibackenfutter einer CNC-Maschine aufgenommen werden kann.

3. Vorrichtung zum Lasergaslegieren von Titan und seinen Legierungen nach Anspruch 1, **dadurch gekennzeichnet, daß** in die Reaktionskammer zusätzliche CNC-gesteuerte Dreh-und Kippbewegungen über entsprechende Drehdurchführungen (23) eingeführt werden.

4. Vorrichtung zum Lasergaslegieren von Titan und seinen Legierungen nach Anspruch 1, **dadurch gekennzeichnet, daß** das Teleskoprohr durch eine Wasserkühlung (24) gekühlt wird.

5. Vorrichtung zum Lasergaslegieren von Titan und seinen Legierungen nach Anspruch 1, **dadurch gekennzeichnet, daß** die Gleitfläche (4) durch eine umlaufende Wasserkühlung (25) gekühlt wird.

6. Vorrichtung zum Lasergaslegieren von Titan und seinen Legierungen nach Anspruch 1, **dadurch gekennzeichnet, daß** der Anteil des in den Reaktionsraum entweichenden Traggases durch die relativen Flächenanteile der Tragflächenanteile (9 und 10) eingestellt wird.

7. Vorrichtung zum Lasergaslegieren von Titan und seinen Legierungen nach Anspruch 1, **dadurch gekennzeichnet, daß** die Vorrichtung zur Messung und Überwachung des Sauerstoff-Partialdruckes (20) eine λ-Sonde ist.

8. Vorrichtung zum Lasergaslegieren von Titan und seinen Legierungen nach Anspruch 1, **dadurch gekennzeichnet, daß** das Traggas die gleiche chemische Zusammensetzung wie das Reaktionsgas hat.

9. Vorrichtung zum Lasergaslegieren von Titan und seinen Legierungen nach Anspruch 1, **dadurch gekennzeichnet, daß** sich hinter dem Einlaßstutzen (18) eine Gasprallfläche (26) befindet.

10. Vorrichtung zum Lasergaslegieren von Titan und seinen Legierungen nach Anspruch 1, **dadurch gekennzeichnet, daß** die Baugruppe 1 als Glocke mit halbkugelförmig ausgebildeter Innenfläche ausgebildet ist, in deren Mittelpunkt sich etwa der Laserstrahlauftreffpunkt (27) befindet.

11. Vorrichtung zum Lasergaslegieren von Titan und seinen Legierungen nach Anspruch 1, **dadurch gekennzeichnet, daß** zur optischen Beobachtung durch die Öffnung (21) ein Endoskop dient.

12. Vorrichtung zum Lasergaslegieren von Titan und seinen Legierungen nach Anspruch 1, **dadurch gekennzeichnet, daß** der Durchmesser der Blende das dreibis zehnfache des Durchmessers des Laserstrahlfokus (13) beträgt.

13. Vorrichtung zum Lasergaslegieren von Titan und seinen Legierungen nach Anspruch 1, **dadurch gekennzeichnet, daß** die Strahlformungseinheit (15) Mittel zur Justage des Laserstrahles (11) relativ zur Blende (12) enthält.

14. Vorrichtung zum Lasergaslegieren von Titan und seinen Legierungen nach Anspruch 1, **dadurch gekennzeichnet, daß** die Blende (12) aus poliertem Molybdän besteht.

## Claims

1. Device for the laser gas alloying of titanium and its alloys, comprising a gas-tight reaction chamber, an element for the passage of the laser beam, an aperture for the entry of the reaction gas and a gas mixing station, wherein the reaction chamber contains an inlet connection piece (18) for the reaction gas, **characterised in that**
A. the gas-tight reaction chamber comprises two structural units (1 and 2) and these two structural units can be moved relative to one another in an almost friction-free manner and protected from the entry of air in a horizontal x-y plane,
B. the practically friction-free mobility is realised by a carrying gas cushion (3)
C. to realise the air cushion effect produced by the carrying gas cushion (3), the opposite sides (4 and 5) of structural units (1 and 2) are designed as planar slide surfaces,
D. the dimensions of the planar slide surfaces (5) are such that the relative mobility in respect of structural unit (1) is greater than the functional surface (6) to be protected of the component (7) to be treated.
E. the planar slide surface (4) of structural unit (1) contains a peripheral carrying gas duct (8)
F. the inner portion of the carrying surface (9) is so configured relative to the outer portion (10) of the carrying surface that the largest proportion of the carrying gas escapes outwards,
G. the passage of the laser beam (11) into the reaction chamber is guaranteed by a diaphragm (12) which is located in the focal point (13) of the laser beam (11),
H. the diaphragm (12) is secured to a diaphragm tube (14) which is connected directly and rigidly to the laser beam forming unit (15),
I. the position of the focal point (13) relative to the surface of the functional surface (6) is guaranteed by a telescopic tube (16) which is connected on its upper side to the laser beam forming unit (15) and at its lower side to structural unit (1),
J. to extract the reaction products and to protect the laser beam forming unit (15), a cross-jet extraction system (17) is disposed between beam forming unit (15) and structural unit (1),
K. outside the reaction chamber is located a gas mixing station to adjust the proportion of nitrogen in the reaction gas,
L. a device (20) for measuring and monitoring the oxygen partial pressure extends into the reaction chamber,
M. the wall of the reaction chamber contains apertures (21) for the visual and microscopic observation of the remelting process.

2. Device for the laser gas alloying of titanium and its alloys according to claim 1, **characterised in that,** to realise simple rotary movements about the z-axis, the planar slide surface (5) of structural unit (2) is directly connected to a rotary actuator flange (22) and the rotary actuator flange (22) is so configured that it can be accommodated with the entire structural unit (2) in a three-jaw chuck of a CNC-machine.

3. Device for laser gas alloying of titanium and its alloys according to claim 1, **characterised in that** additional CNC-controlled rotary and tilting movements are introduced into the reaction chamber via corresponding rotary transmission lead-throughs (23).

4. Device for the laser gas alloying of titanium and its alloys according to claim 1, **characterised in that** the telescopic tube is cooled by a water cooling system (24).

5. Device for the laser gas alloying of titanium and its alloys according to claim 1, **characterised in that** the slide surface (4) is cooled by a peripheral water cooling system (25).

6. Device for the laser gas alloying of titanium and its alloys according to claim 1, **characterised in that** the proportion of the carrying gas escaping into the reaction chamber is adjusted by the relative areas of the carrying surface portions (9 and 10).

7. Device for the laser gas alloying of titanium and its alloys according to claim 1, **characterised in that** the device for measuring and monitoring the oxygen partial pressure (20) is a l-probe.

8. Device for the laser gas alloying of titanium and its alloys according to claim 1, **characterised in that** the carrying gas has the same chemical composition as the reaction gas.

9. Device for the laser gas alloying of titanium and its alloys according to claim 1, **characterised in that** a gas impact surface (26) is located behind the inlet connection piece (18).

10. Device for the laser gas alloying of titanium and its alloys according to claim 1, **characterised in that** structural unit (1) is configured as a bell with an inner surface configured hemispherical, in the mid-point of which approximately the laser beam impact point (27) is located.

11. Device for the laser gas alloying of titanium and its alloys according to claim 1, **characterised in that** an endoscope serves for optical observation through aperture (21).

12. Device for the laser gas alloying of titanium and its alloys according to claim 1, **characterised in that** the diameter of the diaphragm is three to ten times the diameter of the laser beam focus (13).

13. Device for the laser gas alloying of titanium and its alloys according to claim 1, **characterised in that** the beam forming unit (15) contains means for adjusting the laser beam (11) relative to the diaphragm (12).

14. Device for the laser gas alloying of titanium and its alloys according to claim 1, **characterised in that** the diaphragm (12) consists of polished molybdenum.

## Revendications

1. Dispositif d'alliation par gaz laser de titane et ses alliages composé d'une chambre de réaction étanche au gaz, d'un élément pour le passage du faisceau laser, d'une ouverture pour l'entrée du gaz de réaction et d'un poste de mélange de gaz, la chambre de réaction ayant un ajutage d'entrée (18) pour le gaz de réaction,
**caractérisé en ce que**
A. la chambre de réaction étanche au gaz est formée de deux groupes de construction 1 et 2 et ces deux groupes sont mobiles l'un par rapport à l'autre pratiquement sans frottement dans un plan x-y horizontal, protégé contre la pénétration de l'air,
B. la mobilité pratiquement sans friction est assurée par un coussin de gaz porteur (3),
C. pour réaliser l'effet de coussin de gaz généré par le coussin de gaz porteur (3), les côtés en regard (4, 5) des groupes 1 et 2 sont des surfaces de glissement planes,
D. les dimensions des surfaces de glissement (5) planes sont dimensionnées pour que la mobilité relative par rapport au groupe 1 soit supérieure à la surface fonctionnelle (6) à protéger appartenant à la pièce (7) à traiter,
E. la surface de glissement plane (4) du groupe 1 comporte un canal de gaz porteur (8) périphérique,
F. la partie de surface portante intérieure (9) est réalisée par rapport à la partie de surface portante extérieure (10) pour que la plus grande partie du gaz porteur s'échappe vers l'extérieur,
G. le passage du faisceau laser (11) dans la chambre de réaction est assuré à travers un diaphragme (12) qui se trouve au point de focalisation (13) du faisceau laser (11),
H. le diaphragme (12) est fixé à un tube porte diaphragme (14) relié directement et rigidement à l'unité de formation du faisceau laser (15),
I. la position du point de focalisation (13) par rapport à la surface supérieure de la surface fonctionnelle (6) est assurée par un tube télescopique (16) relié par son côté supérieur à l'unité de formation du faisceau laser (15) et par son côté inférieur au groupe 1,
J. pour aspirer les produits de réaction et pour protéger l'unité de formation de faisceau (15) il est prévu un système d'aspiration à jets croisés (17) entre l'unité de formation de jet (15) et le groupe 1,
K. à l'extérieur de la chambre de réaction il est prévu un poste de mélange de gaz réglant la teneur en azote du gaz de réaction,
L. un dispositif (20) de mesure et de surveillance de la pression partielle d'oxygène arrive dans la chambre de réaction,
M. la paroi de la chambre de réaction comporte des ouvertures (21) pour l'observation visuelle et microscopique de l'opération de transformation par fusion.

2. Dispositif d'alliation de titane et de ses alliages selon la revendication 1,
**caractérisé en ce que**
pour réaliser des mouvements de rotation simples autour de l'axe z, les surfaces de glissement planes (5) du groupe 2 sont reliées directement à une bride d'entraînement en rotation (22) et cette bride (22) est réalisée pour se monter avec l'ensemble du groupe 2 dans un mandrin à trois mors d'une machine à commande numérique CNC.

3. Dispositif d'alliation de titane et de ses alliages selon la revendication 1,
**caractérisé en ce que**
des mouvements de rotation et de basculement à commande numérique CNC supplémentaires sont introduits dans la chambre de réaction par des passages tournants (23) correspondants.

4. Dispositif d'alliation de titane et de ses alliages selon la revendication 1,
**caractérisé en ce que**
le tube télescopique est refroidi par un refroidissement par eau (24).

5. Dispositif d'alliation de titane et de ses alliages selon la revendication 1,
**caractérisé en ce que**
la surface de glissement (4) est refroidie par un refroidissement par eau en circulation (25).

6. Dispositif d'alliation de titane et de ses alliages selon la revendication 1,
**caractérisé en ce que**
la teneur en gaz porteur s'échappant de la chambre de réaction est réglée par les parties de surface relatives des parties de surface portantes (9) et (10).

7. Dispositif d'alliation de titane et de ses alliages selon la revendication 1,
**caractérisé en ce que**
le dispositif de mesure et de surveillance de la pression partielle d'oxygène (20) est une sonde λ.

8. Dispositif d'alliation de titane et de ses alliages selon la revendication 1,
**caractérisé en ce que**
le gaz porteur a la même composition chimique que le gaz de réaction.

9. Dispositif d'alliation de titane et de ses alliages selon la revendication 1,
**caractérisé par**
une surface brise jet (26) derrière l'ajutage d'entrée (18).

10. Dispositif d'alliation de titane et de ses alliages selon la revendication 1,
**caractérisé en ce que**
l'ensemble 1 est une cloche avec une surface intérieure en forme de demi-sphère dont le centre correspond sensiblement au point d'impact (27) du faisceau laser.

11. Dispositif d'alliation de titane et de ses alliages selon la revendication 1,
**caractérisé en ce qu'**
on utilise un endoscope à travers l'ouverture (21) pour l'observation optique.

12. Dispositif d'alliation de titane et de ses alliages selon la revendication 1,
**caractérisé en ce que**
le diamètre du diaphragme correspond à trois jusqu'à dix fois le diamètre du foyer (13) du faisceau laser.

13. Dispositif d'alliation de titane et de ses alliages selon la revendication 1,
**caractérisé en ce que**
l'unité de formation de faisceau (15) comporte des moyens pour ajuster le faisceau laser (11) par rapport au diaphragme (12).

14. Dispositif d'alliation de titane et de ses alliages selon la revendication 1,
**caractérisé en ce que**
le diaphragme (12) est en molybdène poli.
